# EUROPEAN PATENT SPECIFICATION

(11) **EP 0 384 039 B1**
(45) Date of publication and mention of the grant of the patent: **03.03.1993**
(21) Application number: 89200383.1
(22) Date of filing: 10.03.1986
(51) Int. Cl.: A01F 15/10, A01D 90/02

(54) **Baler feeder mechanism**
Ballenpressezuführmechanismus
Mécanisme d'amenée pour des presse-balles

(43) Date of publication of application: 29.08.1990
(62) Divisional of application: 86200373.8
(73) Proprietor: FORD NEW HOLLAND N.V., 8210 Zedelgem (BE)
(72) Inventor: Naaktgeboren, Adrianus, B-8211 Zedelgem (Veldegem) (BE)
(74) Representative: Vandenbroucke, Alberic

(56) References cited:
- EP-A- 0 148 537
- DE-A- 1 782 584
- FR-A- 2 544 164

## Description

This invention relates to agricultural balers and more specifically to balers of the traditional rectangular type, i.e. balers which produce bales of crop material which are rectangular in side view.

In EP-A-0.148.537 there is disclosed a baler of basically conventional design in that it comprises a bale case or chamber in which a bale of crop material is formed, having an inlet opening communicating with a feeder duct in which wads of crop material are accumulated which subsequently are transferred or stuffed in the bale case for compression by a reciprocable plunger operating within the bale case. In this particular baler, the packing of crop material into the feeder duct to form a wad is effected by packer tines extending along a tine bar rotatable within the feeder duct, and the stuffing of an accumulated wad into the bale case is accomplished by stuffer tines mounted on the tine bar and offset from the packer tines such that the outer ends of the respective sets of tines follow different paths which are preferably generally apple-shaped.

This feeding and stuffing arrangement has been found generally satisfactory except that with certain crops and crop conditions the feeding operation is less than satisfactory whereby the overall baler capacity is reduced accordingly and the top filling of the bale case is sometimes insufficient so that bales of irregular density are produced. The reason for this is that, if silage or a very wet crop, for example, is being handled, it is to some extent compressed by the packer tines as it is fed thereby into the feeder duct and a given charge tends not to recover from the compression in contrast to dry hay or straw, for example, which springs back on being released after compression and this natural resilience means that the hay or straw engages the adjacent walls of the feeder duct and thus maintains its position in the duct.

However, with silage and other crop which does not have this natural resilience, there is a tendency for a given charge to fall under gravity once presented to the feeder duct by the packer tines. The greater the time lag between successive sets of tines entering the feeder duct, the further a charge is likely to fall.

This problem is aggravated in larger balers which are becoming increasingly popular.

Another so-called in-line or bottom-fed baler of a type similar to the one illustrated in EP-A-0.148.537 is disclosed in FR-A-2.544.164. The feeder means of the baler shown therein comperise two sets of packer tines and one set of stuffer tines which become consecutively operative to accumulate a wad of crop material in the feeder duct and to stuff an accumulated wad from the feeder duct into the bale case. The stuffer tines are rotatable around a first axis and follow a perfectly circular path when stuffing a wad of crop material from the feeder duct into the bale case. The first and second sets of packer tines are mounted for rotary movement around further axes on a common mounting means which itself is rotatable around the first axis; said further axes being offset from the first axis. Cam means cause the first and second sets of packer tines to oscillate back-and-forth around their own axes when the mounting means rotate around the first axis. This results in a combined non-circular movement of said first and second sets of packer tines.

Feeder means of the type as disclosed in FR-A-2.544.164 have several drawbacks; one such drawback being the less than satisfactory stuffing action obtained by the stuffing tines following circular paths and another drawback being the jerking operation of cam controlled sets of packer tines.

It is the objective of the present invention to provide a baler of the general type as disclosed in EP-A-0.148.537 and FR-A-2.544.164 with a smoothly operating feeder mechanism which performs fully satisfactorily even in adverse crop conditions.

According to the present invention there is provided an agricultural baler including a bale case having an inlet opening formed therein; a feeder duct communicating with the bale case through said inlet opening; a plunger reciprocable within the bale case to compress a plurality of wads of crop material received in the bale case from the feeder duct to form a bale and feeder means operable within the feeder duct to accumulate a wad of crop material therein and to stuff that wad into the bale case; said feeder means comprising :
- a frame member rotatable around a first axis;
- a first tine bar rotatably mounted on the frame member around a second axis offset from the first axis, said first tine bar having mounted thereon a first set of packer tines and a set of stuffer tines angularly offset from the first set of packer tines relative to the second axis;
- first drive means operable to rotate the feeder means in a first direction around the first axis; and
- further drive means including generally stationary means co-axial with the first axis and drive transmitting means drivingly coupling said first tine bar to said generally stationary means in a manner so that, as the first drive means rotate the feeder means in the first direction around the generally stationary means co-axial with the first axis, the further drive means cause the first tine bar with the set of packer tines and the set of stuffer tines thereon to rotate in the opposite direction around the second axis, and
   the baler being characterized in that the feeder means further also comprise :
- a second tine bar with at least one further set of packer tines extending therefrom, said second tine bar being rotatably mounted on the frame member around a third axis offset from the first and second axes, and
- connecting means interconnecting the first and second tine bars for, in use of the baler, the rotational movement of the first tine bar around the second axis to cause movement of the second tine bar around the third axis; the arrangement being such that, during each feeding cycle of the feeder means, first, the sets of packer tines consecutively feed and accumulate charges of crop material into the feeder duct and subsequently, the set of stuffer tines, on the one hand, initially adds a final charge of crop material to the previously accumulated charges of crop material in the feeder duct to thereby form a full wad of crop material in said feeder duct and, on the other hand, ultimately stuffs the full wad of crop material from the feeder duct through the inlet opening into the bale case.

An agricultural baler in accordance with the present invention will now be described in greater detail, by way of example, with reference to the accompanying drawings in which :
Figure 1 is a schematic side view of the baler,
Figure 2 is an enlarged sectional view of a detail of Figure 1,
Figure 3 is a sectional view on the line III-III of Figure 2, and
Figures 4 to 11 are explanatory diagrams helpful in explaining the operation of the baler of Figures 1 to 3.

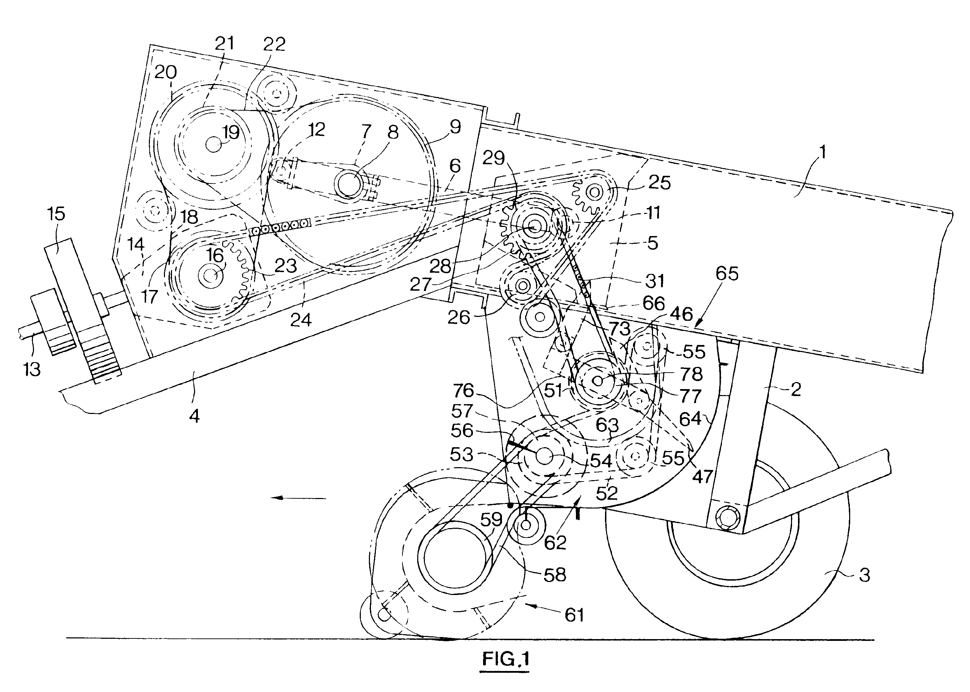

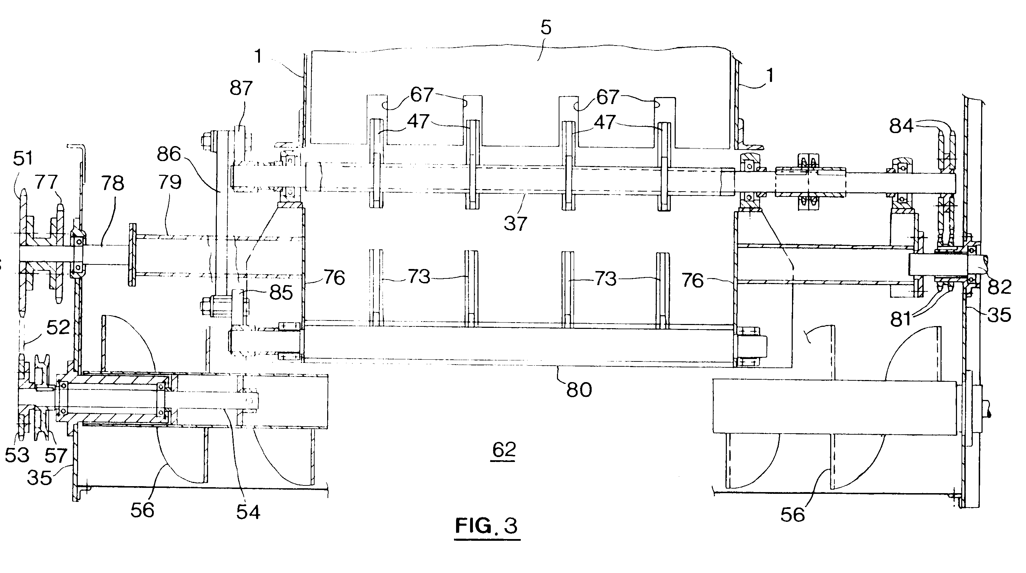

Referring to Figures 1 to 3 of the drawings, the baler comprises a bale case or chamber 1 mounted on a frame 2 which is supported by wheels 3. A tongue or draw bar 4 extends forwardly from the bale case 1 for attachment to a tractor or other vehicle used for towing the baler, this vehicle not being shown. A plunger 5 is mounted for reciprocation within the bale case 1 and is attached by a connecting rod 6 to a crank arm 7 attached to a crank shaft 8 which also carries a sprocket 9. The connecting rod 6 is pivotally attached to the plunger at 11 and pivotally attached at its other end to the crank arm 7 at 12. A drive shaft 13 is adapted for connection to the power take-off (PTO) of the tractor or other vehicle and is also connected to a gear box 14 on the baler via a flywheel 15.

The gearbox 14 has an output shaft 16 which carries sprocket 17 around which a chain 18 passes to a sprocket 20 of larger diameter on an intermediate shaft 19, this shaft also carrying a smaller diameter sprocket 21 attached by a chain 22 to the sprocket 9 on the crank shaft 8. This conventional arrangement effects a speed reduction for the rotation of the sprocket 9 from the gearbox 14, rotation of the sprocket 9 serving to reciprocate the plunger 5 within the bale case 1 by virtue of the crank 7.

The output shaft 16 of the gear box 14 also carries a sprocket 23 around which passes a chain 24 which also extends around idler sprockets 25 and 26 and a drive sprocket 27 carried by a further intermediate shaft 28. The shaft 28 carries a further sprocket 29 around which passes a chain 31; said chain 31 further also extending around a sprocket 77 which is fixed to a shaft 78 of the feeder mechanism. A further sprocket 51 is fixedly connected to the sprocket 77 for rotation in unison therewith. This sprocket 51 drives a chain 52 which further also extends around the sprocket 53 on a shaft 54 and around idler sprockets 55. This chain transmission with components 51 to 55 is operable to drive a first stub auger 56 mounted on the shaft 54 and provided in offset relationship with the feeder duct inlet throat and at the left hand side thereof when seen in the direction of operative movement of the baler.

The shaft 54 carries a pulley 57 around which a belt 58 extends to a further pulley 59 on a crop pick-up device 61. A further belt transmission (not shown) similar to the belt transmission between the first stub auger 56 and the pick-up device 61 extends at the other side of the pick-up device 61 between the latter and a further stub auger 56 provided in offset relationship with the feeder duct inlet throat and at the right hand side thereof; this further belt transmission being operable to drive said further stub auger 56 from said pick-up device 61.

The feeder mechanism according to the present invention basically is derived from the baler feeder mechanism disclosed in the Applicant's own earlier EP-A-0. 148.537 in that, like this earlier arrangement, it also comprises a tine bar 37 with a single set of packer tines 46 and a single set of stuffer tines 47 and which is rotatably mounted at one end of arms 76 and as such, together with a counterbalancing transverse beam 80 fixedly interconnecting the other ends of the arms 76, forms a rectangular frame. The set of packer tines 46 and the set of stuffer tines 47 are angularly offset with respect to each other preferably by an angle of 157,5 degrees. The stuffer tines 47 are longer than the packer tines 46 and the arrangement in this respect is generally simular to that disclosed in said EP-A-0.148.537. Furthermore the arrangement of this tine bar 37 carrying the set of packer tines 46 and the set of stuffer tines 47 is also generally similar to the arrangement of the corresponding parts of the first embodiment disclosed in EP-A-0.236.578 of which the present application is a divisional application. Accordingly, reference is made to both of these earlier disclosures for more details of this structure.

The rectangular frame formed by the arms 76, the counterbalancing transverse beam 80 and the tine bar 37, is rotated by the sprocket 77 which has already been mentioned and which is fixed to the shaft 78 which in turn is fixed to a tube 79 which, again in turn, is fixedly coupled to one arm 76 of the rectangular frame 76, 80, 37 generally at the center thereof. The tine bar 37 is rotated in an opposite direction around its own axis in as much as there are a stationary pair of sprockets 81 which are mounted co-axially on a stub shaft 82 but fixed to the side wall 35 of the machine in order to mount them non-rotationally. The stub shaft 82 is aligned with the shaft 78 and the tube 79 and is fixedly connected to the other arm 76 of the rectangular frame 76, 80, 37 again at the center thereof. Chains passing around the sprockets 81 drive sprockets 84 attached to the tine bar 37 and thus effect the rotation thereof in a ratio of 2:1 in as much as the sprockets 84 have twice as many teeth as the sprockets 81.

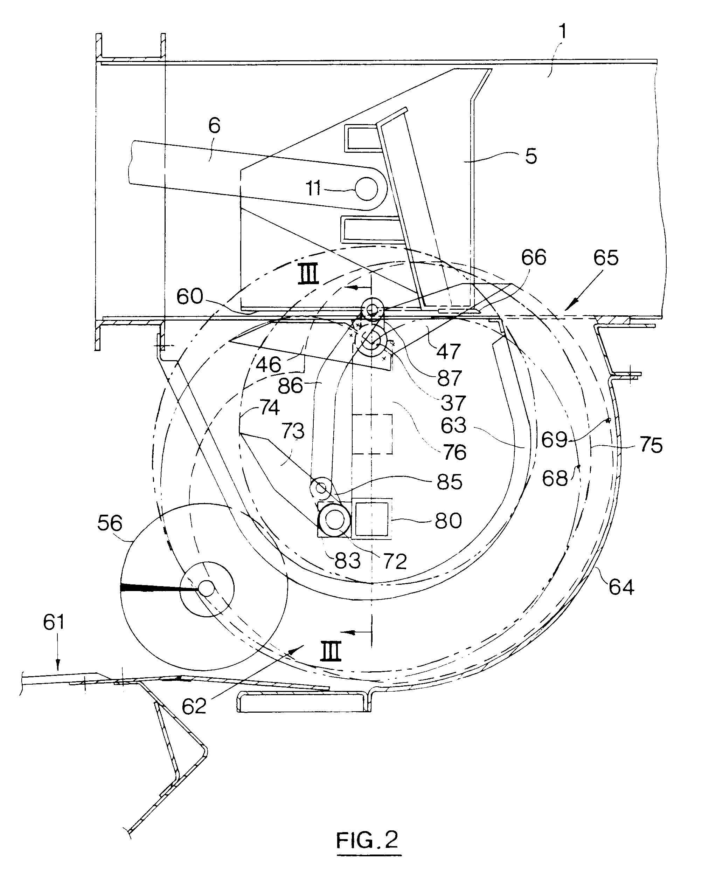

According to the present invention, a second tine bar 72 is provided which carries only one set of tines 73. This second tine bar 72 is linked to the first tine bar 37 in a particular manner as will be described. Basically, this single set of tines 73 is reciprocated by being linked with the first tine bar 37 but, in as much as the whole mounting of the second tine bar 72 is also rotated, then a relatively complex path is followed by the tips of the single set of tines 73. In fact, this path is effectively composed of two nearly circular halves 74 and 75 (although not true circles), the first half 74 being executed within the body of the feeder duct 62 (i.e. not penetrating or nearly not penetrating into the feeder duct 62) and the second half 75 being larger and bringing the tines 73 into the working position and therefore following more closely the rear wall 64 of the feeder duct 62. These two nearly circular paths 74, 75, when viewed overall, give a general apple-shape as indicated most clearly in Figure 2.

The second tine bar 72 is pivotally mounted to one side of the counterbalancing transverse beam 80 via mounting brackets 83 provided thereon and has attached to it at one end a crank arm 85 which is connected to one end of a coupling link 86 which is connected at its other end to a further crank arm 87 which in turn is attached at its other end to the tine bar 37. Thus, the coupling link 86 simply links the two tine bars 37, 72 together via respective crank arms 85 and 87 which are of different lengths. The shorter crank arm is the one 87 on the tine bar 37 which is rotated with that tine bar 37, whereby the longer crank arm 85 on the tine bar 72 causes that tine bar 72 to rock or oscillate relative to its mounting brackets 83 by the connection between the two cranks 85, 87 via the link 86. Thus, the basic movement of the tines 73 on the tine bar 72 is one of reciprocation only but this is varied by the fact that the tine bar 72 itself is also rotating. This is why the tips of the tines 73 execute the two nearly circular paths 74 and 75 to make up the overall apple-shaped path as already mentioned.

In operation of the machine, crop material is picked up from the ground by the pick-up device 61 which feeds it directly to the feeder inlet throat, respectively to the stub augers 56 which then consolidate the crop material centrally of the baler for transfer into the inlet throat of the feeder duct 62 defined by opposite side walls, a front wall 63 and a rear wall 64 and terminating in an inlet opening 65 in the bottom wall of the bale case 1.

As the feeder mechanism operates, the sets of tines 46, 47 and 73 are rotated in a counterclockwise direction (as viewed in Fig.2) about the axis extending through the shafts 78, 82 by virtue of the rectangular frame, formed by the arms 76, the tine bar 37 and the counterbalancing beam 80 being rotated in said direction via the chain transmission 29, 31 and 77. Simultaneously, the sets of tines 46 and 47 also are rotated, as viewed in Figure 2, in a clockwise direction about the axis of the tine bar 37 by virtue of the chain transmission extending between the sprockets 81 and 84. This causes the outer ends of the tines 46 to follow a path of movement designated 68 and the outer ends of the tines 47 to follow a path of movement designated 69. These paths of movement 68, 69 are offset relative to each other with the path 69 penetrating deeper into the feeder duct 62 than the path 68. The paths of movement 68, 69 are generally apple-shaped because the sprockets 84 driving the tines 46 and 47 orbit about the stationary sprockets 81 and have twice as many teeth as said stationary sprockets 81. For two complete revolutions of the rectangular frame 76, 80, 37 in the counterclockwise direction as viewed in Fig. 2, i.e. 720 degrees of rotation, the sprockets 84 together with the tine bar 37 make one complete revolution, i.e. 360 degrees of rotation, in the clockwise direction relative to the axis of said tine bar 37. This results in the outer ends of the tines 46 and 47 moving in the counterclockwise direction, as viewed in Figure 2, along said generally apple-shaped paths 68, respectively 69.

Simultaneously, the second tine bar 72 is caused to oscillate back-and-forth around its axis by virtue of the coupling thereof to the first tine bar 37 in the manner as already described. This oscillatory movement of the second tine bar 72 together with the rotational movement of the rectangular frame 76, 80, 37 results in the outer ends of the packer tines 73 moving in the counterclockwise direction, as viewed in Figure 2, along said overall generally apple-shaped path which is composed of said two nearly circular halves 74 and 75.

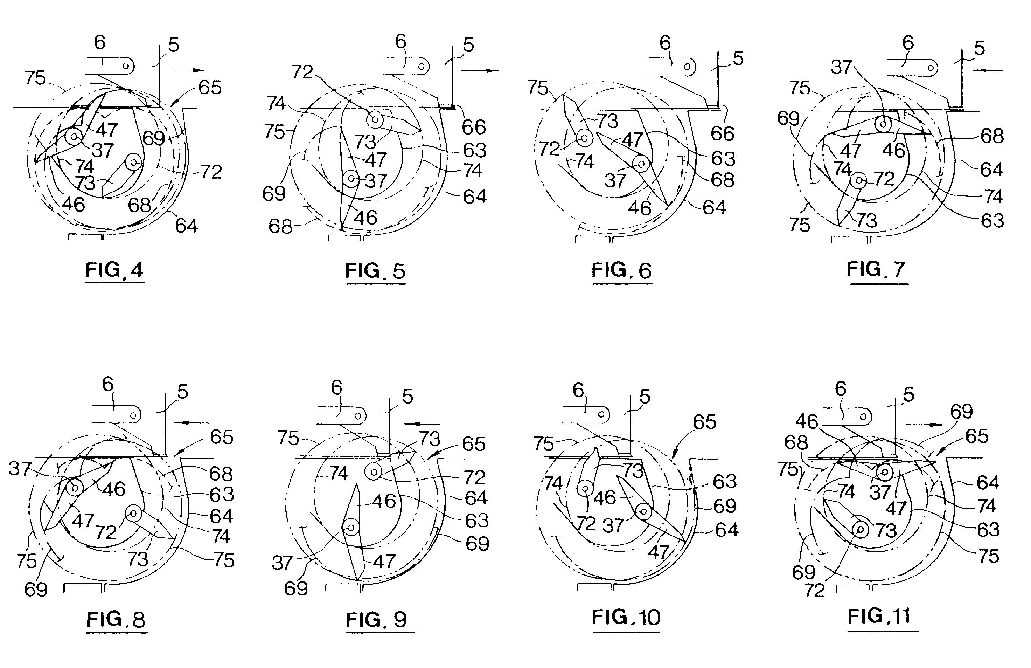

Turning now to Figures 4 to 11, the sequence of operation of the machine will now be described with respect to, on the one hand, the accumulation of charges of crop material in the feeder duct 62 to form a full wad and, on the other hand, the transfer of such a full wad from the feeder duct 62 into the bale case 1. The overall sequence of operation of the feeder mechanism described herabove is generally similar to that of the feeder mechanism illustrated in and described with respect to Figures 4 to 11 of EP-A-0.236.578 except that one of the four strokes is missing.

In Figure 4 the stuffer tines 47 have just completed a stuffer stroke i.e. the stuffer tines 47 have transferred a wad of crop material from the feeder duct 62 into the bale case 1. The plunger 5 is moving on its compression stroke and is seen to be about midway across the bale case entrance 65 or transition between the feeder duct 62 and the bale case 1. The conventional knife 66 on the plunger 5 is thus beginning to cut the stuffed wad of material in the bale case 1 from any material in the feeder duct 62. The next stroke of the feeder mechanism will be that of a packing stroke executed by the packer tines 46 on the tine bar 37 in as much as the packer tines 48 of the first embodiment of EP-A-0.236.578 are the ones which are in effect omitted from the embodiment according to this application. The packer tines 46 thus take a charge of material into the feeder duct 62 (Figures 5-7) which charge effectively is comparable to the combined first and second charges in the first embodiment of EP-A-0.236.578 and it is during this stroke that the tines 73 on the tine bar 72 are executing their "inner path" 74 of operation.

In Figure 5 the plunger 5 is continuing to compress the last loaded wad of material into the bale being formed. In this position of the plunger 5, the inlet opening 65 between the feeder duct 62 and the bale case 1 is closed by an extension 60 of the plunger and thus the packer tines 46 precompress the first charge of crop material in the feeder duct 62 and against the extension 60 of the plunger 5. In figure 6, the plunger 5 is reaching its maximum compression position and in Figure 7, this plunger 5 is starting its retraction movement. It will be noted that in the position according to Figure 7, the first set of packer tines 46 is completing its packing stroke while that the next set of packer tines 73 on the tine bar 72 is being positioned for its operative movement to bring a second charge of crop material into the feeder duct 62 and to thus add said second charge in a precompressed condition to the first charge already in the feeder duct 62. Thus, when the packer tines 46 are completing their operative stroke (Figure 7), it is then that the packer tines 73 of the tine bar 72 come into operation and execute their "outer path" 75 mode of operation, thus taking said second charge of material into the feeder duct 62; this second charge being comparable to the third charge taken by the third set of packer tines 49 of the first embodiment according to EP-A-0.236.578.

Moving to Figure 8, the set of packer tines 73 is proceeding into the feeder duct 62 and the stuffer tines 47 are in position ready to begin their working stroke. The plunger 5 is continuing to execute its return stroke and is already beginning to clear the inlet opening 65 in the bale case lower wall. It is noted that at this point in the cycle, the plunger 5 has completed about half a cycle or 180 degrees while that the rectangular feeder frame formed by the arms 76, the tine bar 37 and the beam 80 has already completed a full revolution or 360 degrees. So far, during the first half of a complete feeder cycle (i.e. 720 degrees of the rectangular frame 76, 37, 80), only one set of tines, namely the packer tines 46 of the tine bar 37 has swept across the full length of the feeder duct 62; the other packer tines 73 of the tine bar 72 and the stuffer tines 47 of the tine bar 37 becoming operative only during the second half of the feeder cycle, i.e. during the second full revolution of the rectangular frame 76, 37, 80.

In Figure 9, the packer tines 73 are finishing their packing stroke and the stuffer tines 47 are beginning their stroke and thus bringing a third and final charge of crop material into the feeder duct 62 and acting at this stage as packer tines. The three individual charges of crop material together form a wad of crop material which is ready to be stuffed into the bale case 1. It should be noted that, at this point, the plunger 5 has now cleared the inlet opening 65 into the bale case 1 so that the packer tines 73, in fact, effect some stuffing of the already loaded crop material into the bale chamber.

In Figure 10 the stuffer tines 47 have proceeded into the feeder duct 62 and it is noted here that these stuffer tines 47 sweep with their outer ends closely along the rear wall 64 of the feeder duct 62 for taking the full wad (i.e. a charge composed of three smaller charges each of which has been fed into the feeder duct 62 by another set of packer tines, respectively the stuffer tines) to the bale case 1 through the inlet opening 65. The packer tines 46 and 73 penetrate to a lesser degree into the feeder duct 62. The plunger 5 is approaching its fully retracted position.

Finally, Figure 11 shows the stuffer tines 47 virtually at the end of their working stroke except that they have yet actually to enter the bale case 1 which position is shown in Figure 4. As the stuffer tines 47 enter the bale case 1, then the full wad of crop material, i.e. the previously loaded three charges of material, is stuffed into the bale case 1 in front of the plunger 5 which is now just commencing its working or compression stroke. In as much as the stuffer tines 47 have to enter the bale case 1, then they must be able to pass the plunger 5 and this is allowed by the provision of slots 67 in the plunger front and base, which slots also accomodate the needles (not shown) for twine wrapping of a formed bale, this being the conventional arrangement.

When the stuffer tines 47 are moving through the bale case 1 in a generally forward direction, the plunger 5 has already commenced its next compression stroke and thus is moving generally in the opposite direction when compared with the generally forwardly directed movement of the stuffer tines. This enables that the plunger 5 smoothly takes over the wad of crop material from the stuffer tines 47 and "wipes" said stuffer tines 47 clean.

It further also will be noted that, unlike their counterparts in the first embodiment according to EP-A-0.236.578, the packer tines 73 equally enter into the bale case 1, whereby these packer tines 73 have been aligned with the stuffer tines 47 on the tine bar 37 and with the slots 67 in the plunger 5.

It will be noted particularly from Figure 2 that both sets of packer tines 46 and 73 as well as the set of stuffer tines 47 all execute separate but similarly shaped paths 68, 74/75 and 69. It further also will be noted that the path 69 of the stuffer tines 47 is spaced closest to the rear wall 64 of the feeder duct 62 and the path 68 of the packer tines 46 is spaced furthest from said rear wall 64 at least when considering the rear and upper half of the feeder duct 62. The stuffer tines 47 penetrate deepest into the feeder duct 62 because these stuffer tines 47 should take with them, during their operative movement, all the material previously accumulated in the feeder duct 62.

It will be appreciated that for the rectangular feeder frame 76, 80, 37 to complete a 720 degrees cycle (i.e. two full revolutions) while that the plunger 5 completes only a 360 degrees cycle as already explained, the transmission ratio between the gearbox 14 and the crank shaft 8 on the one hand and the gearbox 14 and the sprocket 77 associated with the feeder frame 76, 80, 37 on the other hand should be 1:2. As the feeder frame 76, 80, 37 is rotated in a first direction, the chains engaging the fixed sprockets 81 cause the sprockets 84 to rotate in the opposite direction at half the rate, whereby the tine bars 37 and 72 equally are rotated, respectively oscillated, again at half the rate. The resultant movements of the outer ends of the tines 46, 47 and 73 thus are combined movements along the respective apple-shaped paths 68, 69 and 74/75 again at half the rate of the movement of the rectangular feeder frame 76, 80, 37. Thus the ratio between the plunger and each of the sets of tines 46, 47, 73 is 1:1, or, in other words, each of the sets of tines 46, 47, 73 becomes operative once during a full cycle of the plunger.

In the illustrated embodiment, it will be seen that the second tine bar 72 provides further tines 73 which follow closely the packer tines 46 on the tine bar 37 and thus prevent previously packed crop material from falling down the feeder duct 62 and accordingly diminishing the overall effectiveness and hence also the capacity of the feeder operation. The provision of the extra set of tine 73 thus is effective in overcoming the basic problem to the extent that these tines 73 effect some holding or support of already loaded crop material when undergoing their "outer path" 75 of operation.

## Claims

1. An agricultural baler including a bale case (1) having an inlet opening (65) formed therein; a feeder duct (62) communicating with the bale case (1) through said inlet opening (65); a plunger (5) reciprocable within the bale case (1) to compress a plurality of wads of crop material received in the bale case (1) from the feeder duct (62) to form a bale and feeder means operable within the feeder duct (62) to accumulate a wad of crop material therein and to stuff that wad into the bale case (1); said feeder means comprising :
- a frame member (76, 80) rotatable around a first axis;
- a first tine bar (37) rotatably mounted on the frame member (76, 80) around a second axis offset from the first axis, said first tine bar (37) having mounted thereon a first set of packer tines (46) and a set of stuffer tines (47) angularly offset from the first set of packer tines (46) relative to the second axis;
- first drive means (29, 31, 77) operable to rotate the feeder means in a first direction around the first axis; and
- further drive means (81, 84) including generally stationary means (81) co-axial with the first axis and drive transmitting means drivingly coupling said first tine bar (37) to said generally stationary means (81) in a manner so that, as the first drive means (29, 31, 77) rotate the feeder means in the first direction around the generally stationary means (81) co-axial with the first axis, the further drive means (81, 84) cause the first tine bar (37) with the set of packer tines (46) and the set of stuffer tines (47) thereon to rotate in the opposite direction around the second axis, and
characterized in that the feeder means further also comprise :
- a second tine bar (72) with at least one further set of packer tines (73) extending therefrom, said second tine bar (72) being rotatably mounted on the frame member (76, 80) around a third axis offset from the first and second axes, and
- connecting means (86, 85, 87) interconnecting the first and second tine bars (37, 72) for, in use of the baler, the rotational movement of the first tine bar (37) around the second axis to cause movement of the second tine bar (72) around the third axis; the arrangement being such that, during each feeding cycle of the feeder means, first, the sets of packer tines (46, 73) consecutively feed and accumulate charges of crop material into the feeder duct (62) and subsequently, the set of stuffer tines (47), on the one hand, initially adds a final charge of crop material to the previously accumulated charges of crop material in the feeder duct (62) to thereby form a full wad of crop material in said feeder duct (62) and, on the other hand, ultimately stuffs the full wad of crop material from the feeder duct (62) through the inlet opening (65) into the bale case (1).

2. An agricultural baler according to claim 1, characterized in that the frame member (76, 80) comprises :
- a pair of generally parallel arms (76), each one of which is fixedly coupled intermediate its ends to a corresponding shaft assembly of a pair of transversely spaced apart and aligned shaft assemblies (78/79; 82) determining said first axis, and, said arms (76) supporting at one of their ends the first tine bar (37) for rotational movement around the second axis, and
- a counterbalancing transverse beam (80) fixedly interconnecting the other ends of the arms (76) and supporting the second tine bar (72) for rotational movement around the third axis; the arrangement being such that the arms (76), the counterbalancing beam (80) and the first tine bar (37) together form a generally rectangular frame.

3. A baler according to claim 1 or 2, characterized in that the first tine bar (37) and the further tine bar (72) are provided generally diametrically opposite to each other with respect to the first axis of rotation and at substantially equal distances from said first axis of rotation.

4. An agricultural baler according to any of the preceding claims, characterized in that the connecting means (86, 85, 87) comprise a coupling link (86), the ends of which are pivotally attached to the respective tine bars (37, 72) through crank arms (85, 87) of differing lengths; the shorter one (87) being associated with the first tine bar (37) whereby the second tine bar (72) is caused to oscillate back-and-forth around the third axis by the rotation of the first tine bar (37) around the second axis.

5. An agricultural baler according to any of the preceding claims, characterized in that the set of packer tines (46) of the first tine bar (37) is provided substantially diametrically opposite to the set of stuffer tines (47) with respect to said tine bar (37).

6. A baler according to any of the preceding claims, characterized in that the transmission ratio of the further drive means (81, 84) is such that, for a given angular displacement of the feeder means in the first direction around the first axis, the first tine bar (37) is angularly displaced in the opposite direction around the second axis through an angle corresponding to half said given angular displacement of the feeder means about said first axis; the arrangement being such that the set of packer tines (46) and the set of stuffer tines (47) of the first tine bar (37) make a resultant movement in the first direction.

7. A baler according to claim 6, characterized in that :
- the paths (68, 69) of movement of the outer ends of the packer tines (46) and the stuffer tines (47) of the first tine bar (37) are generally apple-shaped, and
- the path (74/75) of movement of the outer ends of the packer tines (73) of the second tine bar (72) is effectively composed of two generally circularly shaped, partially overlapping halves (74, 75) which, when viewed overall, equally define a general apple-shape.

8. A baler according to claim 6 or 7 and further comprising a rotatable crank arm (7) connected to the plunger (5) for causing reciprocation thereof in the bale case (1), and
characterized in that
the first drive means (29, 31, 77) coupled to the feeder means are operable, while that the crank arm (7) makes one complete 360 degrees revolution, to rotate said feeder means in said first direction through two complete 360 degrees revolutions thereby causing the sets of packer tines (46, 73) and the set of stuffer tines (47) to make one complete cycle along their respective paths (68, 74/75, 69) in said first direction.

9. A baler according to any of the preceding claims, characterized in that the stuffer tines (47) have outer ends which, during operation, follow a path of movement (69) which penetrates deeper into the feeder duct (62) than the paths of movement (68, 74/75) of the outer ends of the packer tines (46, 73).

10. A baler according to any of the preceding claims, characterized in that the sets of packer tines (46, 73) successively become operative inbetween two successive operative strokes of the set of stuffer tines (47) whereby the set of packer tines (73), which becomes operative after the other set of packer tines (46), penetrates deeper into the feeder duct (62) than said other set of packer tines (46).

11. A baler according to any of the preceding claims, characterized in that, during operation, the stuffer tines (47) and the packer tines (73) of the second tine bar (72) penetrate from the feeder duct (62) into the bale case (1) while that the packer tines (46) of the first tine bar (37) do not enter into the bale case (1) subsequent to their operative stroke through the feeder duct (62).

12. A baler according to any of the preceding claims characterized in that the sets of packer tines (46, 73) and the set of stuffer tines (47) also serve to precompress a wad of crop material in the feeder duct (62) prior to stuffing this wad into the bale case (1).

13. A baler according to any of the preceding claims wherein the bale case (1) has a bottom wall in which the inlet opening (65) is formed; wherein the feeder duct (62) has an upper end facing generally upwardly and communicating with the inlet opening (65) in the bale case (1) and a lower end facing generally in a forward direction; and wherein pick-up means (61) are provided adjacent the lower end of the feeder duct (62) for picking up crop material from the ground and delivering it toward the feeder means, and
characterized in that,
the feeder means comprise a single rotary feeder structure (76, 80, 37) including crop-engaging means (47) which, in operation, turn through 360 degrees of revolution along a course (69) leading :
- into the feeder duct lower end,
- rearwardly through the feeder duct (62) and
- up into the bale case (1) for stuffing a wad of crop material from the feeder duct (62) into the bale case (1), and
- back to the feeder duct lower end for attacking a next wad of crop material.

14. A baler according to any of the claims 1-12 wherein the bale case (1) has a bottom wall in which the inlet opening (65) is formed; wherein the feeder duct (62) has an upper end facing generally upwardly and communicating with the inlet opening (65) in the bale case (1) and a lower end facing generally in a forward direction; and wherein pick-up means (61) are provided adjacent the lower end of the feeder duct (62) for picking up crop material from the ground and delivering it toward the feeder means, and
characterized in that,
the feeder duct (62) is generally circularly curved in shape with the center of curvature being either co-incident with the first axis or proximate thereto, and in that, during operation, the sets of packer tines (46, 73) and the set of stuffer tines (47) alternatively move through the feeder duct (62) in the direction from the lower end toward the upper end thereof.

## Patentansprüche

1. Landwirtschaftliche Ballenpresse, die eine Ballenkammer (1) mit einer darin ausgebildeten Einlaßöffnung (65), einen Zuführungskanal (62), der mit der Ballenkammer (1) über die Einlaßöffnung (65) in Verbindung steht, einen in der Ballenkammer (1) hin- und herbeweglichen Preßkolben (5) zum Verdichten einer Vielzahl von Packen von Erntematerial, die in der Ballenkammer (1) von dem Zuführungskanal (62) empfangen werden, um einen Ballen zu bilden, und Zuführungseinrichtungen einschließt, die in dem Zuführungskanal (62) betreibbar sind, um in diesem einen Packen von Erntematerial anzusammeln und diesen Packen in die Ballenkammer (1) hineinzustopfen, wobei die Zuführungseinrichtungen folgende Teile umfassen:
- ein Rahmenbauteil (76,80), das um eine erste Achse drehbar ist,
- eine erste Zinkenstange (37), die drehbar auf dem Rahmenteil (76,80) um eine zweite gegenüber der ersten Achse versetzte Achse befestigt ist, wobei auf der ersten Zinkenstange (37) ein erster Satz von Packerzinken (46) und ein erster Satz von Stopferzinken (47) befestigt ist, die bezüglich der zweiten Achse winkelmäßig gegenüber dem ersten Satz von Packerzinken (46) versetzt sind,
- erste Antriebseinrichtungen (29,31,77), die zur Drehung der Zuführungseinrichtungen in einer ersten Richtung um die erste Achse betreibbar sind, und
- weitere Antriebseinrichtungen (81,84), die allgemein stationäre Einrichtungen (81) koaxial zur ersten Achse und Antriebsübertragungseinrichtungen einschließen, die antriebsmäßig die erste Zinkenstange (37) mit den allgemein stationären Einrichtungen (81) derart koppeln, daß, während die ersten Antriebseinrichtungen (29,31,77) die Zuführungseinrichtungen in der ersten Richtung um die allgemein stationären Einrichtungen (81) koaxial zur ersten Achse drehen, die weiteren Antriebseinrichtungen (81,84) eine Drehung der ersten Zinkenstange (37) mit dem daran angeordneten Satz von Packerzinken (46) und dem Satz von Stopferzinken (47) in der entgegengesetzten Richtung um die zweite Achse hervorrufen, und
dadurch gekennzeichnet, daß die Zuführungseinrichtungen weiterhin folgende Teile umfassen:
- eine zweite Zinkenstange (72) mit zumindestens einem weiteren Satz von sich von dieser erstreckenden Packerzinken (73), wobei die zweite Zinkenstange (72) drehbar auf dem Rahmenbauteil (76,80) um eine dritte Achse befestigt ist, die gegenüber den ersten und zweiten Achsen versetzt ist, und
- Verbindungseinrichtungen (86,85,87), die die ersten und zweiten Zinkenstangen (37,72) miteinander verbinden, damit im Betrieb der Ballenpresse die Drehbewegung der ersten Zinkenstange (37) um die zweite Achse eine Bewegung der zweiten Zinkenstange (72) um die dritte Achse hervorruft, wobei die Anordnung derart ist, daß während jedes Zuführungszyklus der Zuführungseinrichtungen zunächst die Sätze von Packerzinken (46, 73) aufeinanderfolgend Ladungen des Erntematerials in den Zuführungskanal (62) einleiten und sammeln und nachfolgend der Satz von Stopferzinken (47) einerseits anfänglich eine abschließende Ladung von Erntematerial den vorher angesammelten Ladungen von Erntematerial in den Zuführungskanal (62) hinzufügt, um einen vollständigen Packen von Erntematerial in dem Zuführungskanal (62) zu bilden, und andererseits abschließend den vollen Packen aus Erntematerial aus dem Zuführungskanal (62) durch die Einlaßöffnung (65) in die Ballenkammer (1) stopft.

2. Landwirtschaftliche Ballenpresse nach Anspruch 1, dadurch **gekennzeichnet**, daß das Rahmenbauteil (76,80) folgende Teile umfaßt:
- zwei allgemein parallele Arme (76), die jeweils fest zwischen ihren Enden mit einer entsprechenden Wellenbaugruppe eines Paares von mit Querabstand angeordneten und miteinander ausgerichteten Wellenbaugruppen (78/79;82) verbunden sind, die die erste Achse bilden, wobei die Arme (76) an einem ihrer Enden die erste Zinkenstange (37) für eine Drehbewegung um die zweite Achse lagern, und
- einen Gewichtsausgleichs-Querträger (80), der die anderen Enden der Arme (76) fest miteinander verbindet und die zweite Zinkenstange (72) für eine Drehbewegung um die dritte Achse lagert, wobei die Anordnung derart ist, daß die Arme (76), der Gewichtsausgleichsträger (80) und die erste Zinkenstange (37) zusammen einen allgemein rechtwinkeligen Rahmen bilden.

3. Ballenpresse nach Anspruch 1 oder 2,
dadurch **gekennzeichnet**, daß die erste Zinkenstange (37) und die weitere Zinkenstange (72) allgemein diametral entgegengesetzt zueinander bezüglich der ersten Drehachse und unter im wesentlichen gleichen Abständen von dieser ersten Drehachse angeordnet sind.

4. Landwirtschaftliche Ballenpresse nach einem der vorhergehenden Ansprüche,
dadurch **gekennzeichnet**, daß die Verbindungseinrichtungen (86,85,87) ein Kupplungsgestänge (86) umfassen, dessen Ende schwenkbar an den jeweiligen Zinkenstangen (37,72) über Kurbelarme (85,87) mit unterschiedlichen Längen befestigt sind, wobei der kürzere Kurbelarm (87) der ersten Zinkenstange (37) zugeordnet ist, wodurch eine Schwingung der zweiten Zinkenstange (27) rückwärts und vorwärts um die dritte Achse durch die Drehung der ersten Zinkenstange (37) um die zweite Achse hervorgerufen wird.

5. Landwirtschaftliche Ballenpresse nach einem der vorhergehenden Ansprüche,
dadurch **gekennzeichnet**, daß der Satz von Packerzinken (46) der ersten Zinkenstange (37) im wesentlichen diametral gegenüberliegend zu dem Satz von Stopferzinken (47) bezüglich der Zinkenstange (37) angeordnet ist.

6. Ballenpresse nach einem der vorhergehenden Ansprüche, dadurch **gekennzeichnet**, daß das Übersetzungsverhältnis der weiteren Antriebseinrichtungen (81,84) derart ist, daß für eine vorgegebene Winkelbewegung der Zuführungseinrichtungen in der ersten Richtung um die erste Achse die erste Zinkenstange (37) winkelmäßig in der entgegengesetzten Richtung um die zweite Achse über einen Winkel bewegt wird, der der halben vorgegebenen Winkelbewegung der Zuführungseinrichtungen um die erste Achse entspricht, wobei die Anordnung derart ist, daß der Satz von Packerzinken (46) und der Satz von Stopferzinken (47) der ersten Zinkenstange (37) eine resultierende Bewegung in der ersten Richtung ausführt.

7. Ballenpresse nach Anspruch 6,
dadurch **gekennzeichnet,** daß:
- die Bewegungsbahnen (68,69) der äußeren Enden der Packerzinken (46) und der Stopferzinken (47) der ersten Zinkenstange (37) allgemein apfelförmig sind, und
- die Bewegungsbahn (74/75) der äußeren Enden der Packerzinken (73) der zweiten Zinkenstange (72) effektiv aus zwei allgemein kreisförmigen, sich teilweise überlappenden Hälften (74,75) zusammengesetzt ist, die bei einer Gesamtbetrachtung in gleicher Weise allgemein eine Apfelform bilden.

8. Ballenpresse nach Anspruch 6 oder 7, die weiterhin einen drehbaren Kurbelarm (7) aufweist, der mit dem Preßkolben (5) verbunden ist, um dessen Hin- und Herbewegung in der Ballenkammer (1) hervorzurufen,
dadurch **gekennzeichnet**, daß die ersten mit den Zuführungseinrichtungen gekoppelten Antriebseinrichtungen (29, 31,77) so betreibbar sind, daß sie, wenn der Kurbelarm (7) eine vollständige Umdrehung über 360° ausführt, die Zuführungseinrichtungen in der ersten Richtung über zwei vollständige 360°Umdrehungen drehen, wodurch bewirkt wird, daß die Sätze von Packerzinken (46,73) und der Satz von Stopferzinken (47) einen vollständigen Zyklus entlang ihrer jeweiligen Bahnen (68,74/75, 69) in der ersten Richtung ausführen.

9. Ballenpresse nach einem der vorhergehenden Ansprüche, dadurch **gekennzeichnet**, daß die Stopferzinken (47) äußere Enden aufweisen, die während des Betriebs einer Bewegungsbahn (69) folgen, die tiefer in den Zuführungskanal (62) eindringt, als die Bewegungsbahnen (68,74/75) der äußeren Enden der Packerzinken (46,73).

10. Ballenpresse nach einem der vorhergehenden Ansprüche, dadurch **gekennzeichnet**, daß die Sätze von Packerzinken (46,73) aufeinanderfolgend zwischen zwei aufeinanderfolgenden Arbeitshüben des Satzes von Stopferzinken (47) wirksam werden, wobei der Satz von Packerzinken (73), der nach dem anderen Satz von Packerzinken (46) wirksam wird, tiefer in den Zuführungskanal (62) eindringt, als der andere Satz von Packerzinken (46).

11. Ballenpresse nach einem der vorhergehenden Ansprüche, dadurch **gekennzeichnet**, daß im Betrieb die Stopferzinken (47) und die Packerzinken (73) der zweiten Zinkenstange (72) von dem Zuführungskanal (62) aus in die Ballenkammer (61) eindringen, während die Packerzinken (46) der ersten Zinkenstange nach ihrem Arbeitshub durch den Zuführungskanal (62) nicht in die Ballenkammer (1) eintreten.

12. Ballenpresse nach einem der vorhergehenden Ansprüche, dadurch **gekennzeichnet**, daß die Sätze von Packerzinken (46,73) und der Satz von Stopferzinken (47) außerdem zur Vorverdichtung eines Packens von Erntematerial in dem Zuführungskanal (62) vor dem Stopfen dieses Packens in die Ballenkammer (1) dienen.

13. Ballenpresse nach einem der vorhergehenden Ansprüche, bei der die Ballenkammer (1) eine Bodenwand aufweist, in der die Einlaßöffnung (65) ausgebildet ist, bei der der Zuführungskanal (62) ein oberes, allgemein nach oben gerichtetes und mit der Einlaßöffnung (65) mit der Ballenkammer (1) in Verbindung stehendes Ende und ein unteres Ende aufweist, das allgemein in Vorwärtsrichtung gerichtet ist, und bei der Aufnahmeeinrichtungen (61) benachbart zum unteren Ende des Zuführungskanals (62) vorgesehen sind, um Erntematerial von dem Boden aufzunehmen und es den Zuführungseinrichtungen zuzuführen, dadurch **gekennzeichnet**, daß
die Zuführungseinrichtungen eine einzige rotierende Zuführungsstruktur (76,80,37) aufweisen, die mit dem Erntematerial in Eingriff kommende Einrichtungen (47) einschließen, die im Betrieb eine Drehung über 360° entlang einer Bahn (69) ausführen, die:
- in das untere Ende des Zuführungskanals,
- rückwärts durch den Zuführungskanal (62) und
- aufwärts in die Ballenkammer (1), um einen Packen von Erntematerial von dem Zuführungskanal (62) in die Ballenkammer (1) zu stopfen, und
- zurück zum unteren Ende des Zuführungskanals führt, um einen nächsten Packen von Erntematerial anzugreifen.

14. Ballenpresse nach einem der Ansprüche 1 - 12, bei der die Ballenkammer (1) eine Bodenwand aufweist, in der die Einlaßöffnung (65) ausgebildet ist, bei der der Zuführungskanal (62) ein oberes, allgemein nach oben gerichtetes Ende, das mit der Einlaßöffnung (65) in der Ballenkammer (1) in Verbindung steht, und ein unteres Ende aufweist, das allgemein vorwärts gerichtet ist, und bei der Aufnahmeeinrichtungen (61) benachbart zum unteren Ende des Zuführungskanals (62) vorgesehen sind, um Erntematerial vom Boden aufzunehmen und es in Richtung auf die Zuführungseinrichtungen zuzuführen,
dadurch **gekennzeichnet**, daß der Zuführungskanal (62) eine allgemein kreisförmig gekrümmte form aufweist, wobei der Krümmungsmittelpunkt entweder mit der ersten Achse zusammenfällt oder nahe bei dieser liegt, und daß während des Betriebs die Sätze von Packerzinken (46,73) und der Satz von Stopferzinken (47) sich abwechselnd durch den Zuführungskanal (62) in der Richtung von dessen unteren Ende zu dessen oberen Ende bewegen.

## Revendications

1. Ramasseuse-presse agricole comprenant une cage à balles (1) qui comporte, défini en elle, un orifice d'entrée (65); un canal de chargement (62) qui communique avec la cage à balles (1) par l'intermédiaire dudit orifice d'entrée (65); un piston (5) apte à opérer un mouvement alternatif à l'intérieur de la cage à balles (1) pour comprimer plusieurs bottes de produits de récolte délivrées dans la cage à balles (1) à partir du canal de chargement (62), afin de former une balle; et des moyens chargeurs aptes à opérer à l'intérieur du canal de chargement (62) pour y accumuler une botte de produits de récolte et pour bourrer cette botte dans la cage à balles (1); lesdits moyens chargeurs comportant :
- un élément d'armature (76, 80) mobile en rotation autour d'un premier axe;
- une première barre porte-dents (37) montée sur l'élément d'armature (76, 80) en étant mobile en rotation autour d'un second axe décalé par rapport au premier axe, ladite première barre porte-dents (37) possédant, montées sur elle, une première série de dents de tassement (46) et une série de dents de bourrage (47) décalée angulairement vis-à-vis de la première série de dents de tassement (46) par rapport au second axe;
- des premiers moyens d'entraînement (29, 31, 77) aptes à opérer pour faire tourner les moyens chargeurs dans une première direction autour du premier axe; et
- des seconds moyens d'entraînement (81, 84) comprenant des moyens sensiblement fixes (81) coaxiaux avec le premier axe et des moyens de transmission d'entraînement accouplant dans une relation d'entraînement ladite première barre porte-dents (37) avec lesdits moyens sensiblement fixes (81) de telle façon que, lorsque les premiers moyens d'entraînement (29, 31, 77) font tourner les moyens chargeurs dans la première direction autour des moyens sensiblement fixes (81) coaxiaux avec le premier axe, les seconds moyens d'entraînement (81, 84) font tourner la première barre porte-dents (37) qui comporte la série de dents de tassement (46) et la série de dents de bourrage (47) montées sur elle, dans la direction opposée autour du second axe, et
caractérisée en ce que les moyens chargeurs comportent également :
- une seconde barre porte-dents (72) pourvue d'au moins une seconde série de dents de tassement (73) qui s'étendent à partir d'elle, ladite seconde barre porte-dents (72) étant montée sur l'élément d'armature (76, 80) en étant mobile en rotation autour d'un troisième axe décalé par rapport aux premier et second axes, et
- des moyens de raccordement (86, 85, 87) qui relient entre elles les première et seconde barres porte-dents (37, 72) pour que, pendant un fonctionnement de la ramasseusse-presse, le mouvement de rotation de la première barre porte-dents (37) autour du second axe provoque un mouvement de la seconde barre porte-dents (72) autour du troisième axe; la conception étant telle qu'au cours de chaque cycle de chargement des moyens chargeurs, d'abord, les séries de dents de tassement (46, 73) chargent et accumulent consécutivement des charges de produits de récolte dans le canal de chargement (62) et, ensuite, la série de dents de bourrage (47), d'une part, ajoute initialement une charge de produits de récolte finale aux charges de produits de récolte accumulées préalablement dans le canal de chargement (62), pour ainsi former une botte de produits de récolte complète dans ledit canal de chargement (62) et, d'autre part, bourre finalement la botte de produits de récolte complète du canal de chargement (62) dans la cage à balles (1) à travers l'orifice d'entrée (65).

2. Ramasseuse-presse agricole selon la revendication 1, caractérisée en ce que l'élément d'armature (76, 80) comporte :
- deux bras sensiblement parallèles (76) dont chacun est relié fixement entre ses extrémités à un ensemble formant arbre correspondant de deux ensembles formant arbres (78/79; 82) espacés l'un de l'autre transversalement et alignés, qui déterminent ledit premier axe, lesdits bras (76) supportant, au niveau de l'une de leurs extrémités, la première barre porte-dents (37) en vue d'un mouvement de rotation autour du second axe, et
- une poutre transversale formant contre-poids (80) reliant entre elles d'une manière fixe les autres extrémités des bras (76) et supportant la seconde barre porte-dent (72) en vue d'un mouvement de rotation autour du troisième axe; la conception étant telle que les bras (76), la poutre formant contre-poids (80) et la première barre porte-dents (37) forment ensemble une armature sensiblement rectangulaire.

3. Ramasseuse-presse selon la revendication 1 ou 2, caractérisée en ce que la première barre porte-dents (37) et la seconde barre porte-dents (72) sont disposées en étant, d'une manière générale, diamétralement opposées l'une à l'autre par rapport au premier axe de rotation et à des distances sensiblement égales dudit premier axe de rotation.

4. Ramasseuse-presse agricole selon l'une quelconque des revendications précédentes, caractérisée en ce que les moyens de raccordement (86, 85, 87) comportent une tringle d'accouplement (86) dont les extrémités sont reliées d'une manière pivotante aux barres porte-dents (37, 72) respectives par l'intermédiaire de bras de manivelle (85, 87) de longueurs différentes; le plus court (87) étant associé à la première barre porte-dents (37) pour qu'ainsi la seconde barre porte-dents (72) soit obligée d'osciller suivant un mouvement de va-et-vient autour du troisième axe sous l'effet de la rotation de la première barre porte-dents (37) autour du second axe.

5. Ramasseuse-presse agricole selon l'une quelconque des revendications précédentes, caractérisée en ce que la série de dents de tassement (46) de la première barre porte-dents (37) est disposée, d'une manière générale, en étant diamétralement opposée à la série de dents de bourrage (47) par rapport à ladite barre porte-dents (37).

6. Ramasseuse-presse selon l'une quelconque des revendications précédentes, caractérisée en ce que le rapport de transmission des seconds moyens d'entraînement (81, 84) est tel que, pour un déplacement angulaire donné des moyens chargeurs dans la première direction autour du premier axe, la première barre porte-dents (37) est déplacée angulairement dans la direction opposée autour du second axe sur un angle correspondant à la moitié dudit déplacement angulaire donné des moyens chargeurs autour dudit premier axe; là conception étant telle que la série de dents de tassement (46) et la série de dents de bourrage (47) de la première barre porte-dents (37) effectuent un déplacement résultant dans la première direction.

7. Ramasseuse-presse selon la revendication 6, caractérisée en ce que :
- les trajectoires (68, 69) de déplacement des extrémités extérieures des dents de tassement (46) et des dents de bourrage (47) de la première barre porte-dents (37) ont une configuration sensiblement en forme de pomme, et
- la trajectoire (74/75) de déplacement des extrémités extérieures des dents de tassement (73) de la seconde barre porte-dents (72) est en fait formée de deux moitiés de forme sensiblement circulaire (74, 75) qui se chevauchent partiellement et qui, lorsqu'on les considère dans leur ensemble, définissent elles aussi une configuration générale en forme de pomme.

8. Ramasseuse-presse selon la revendication 6 ou 7 et comportant également un bras de manivelle mobile en rotation (7) relié au piston (5) pour provoquer un mouvement alternatif de celui-ci dans là cage à balles (1), et
caractérisée en ce que
les premiers moyens d'entraînement (29, 31, 77) reliés aux moyens chargeurs sont aptes à opérer pour, pendant que le bras de manivelle (7) effectue un tour complet de 360 degrés, faire tourner lesdits moyens chargeurs dans ladite première direction sur deux tours complets de 360 degrés, afin d'obliger ainsi les séries de dents de tassement (46, 73) et la série de dents de bourrage (47) à effecteur un cycle complet le long de leurs trajectoires (68, 74/75, 69) respectives dans ladite première direction.

9. Ramasseuse-presse selon l'une quelconque des revendications précédentes, caractérisée en ce que les dents de bourrage (47) ont leurs extrémités extérieures qui, en cours de fonctionnement, suivent une trajectoire de déplacement (69) pénétrant dans le canal de chargement (62) plus profondément que les trajectoires de déplacement (68, 74/75) des extrémités extérieures des dents de tassement (46, 73).

10. Ramasseuse-presse selon l'une quelconque des revendications précédentes, caractérisée en ce que les séries de dents de tassement (46, 73) entrent successivement en action entre deux courses actives successives de la série de dents de bourrage (47), moyennant quoi, la série de dents de tassement (73) qui entre en action après l'autre série de dents de tassement (46), pénètre dans le canal de chargement (62) plus profondément que ladite autre série de dents de tassement (46).

11. Ramasseuse-presse selon l'une quelconque des revendications précédentes, caractérisée en ce qu'en cours de fonctionnement, les dents de bourrage (47) et les dents de tassement (73) de la seconde barre porte-dents (72) pénètrent dans la cage à balles (1) à partir du canal de chargement (62), tandis que les dents de tassement (46) de la première barre porte-dents (37) ne pénètrent pas dans la cage à balles (1) après leur course active à travers le canal de chargement (62).

12. Ramasseuse-presse selon l'une quelconque des revendications précédentes, caractérisée en ce que les séries de dents de tassement (46, 73) et la série de dents de bourrage (47) servent également à précomprimer une botte de produits de récolte dans le canal de chargement (62) avant de bourrer celle-ci dans la cage à balles (1).

13. Ramasseuse-presse selon l'une quelconque des revendications précédentes, dans laquelle la cage à balles (1) possède une paroi inférieure dans laquelle l'orifice d'entrée (65) est formé; dans laquelle le canal de chargement (62) possède une extrémité supérieure tournée, d'une manière générale, vers le haut et communiquant avec l'orifice d'entrée (65) formé dans la cage à balles (1), et une extrémité inférieure tournée, d'une manière générale, dans une direction orientée vers l'avant; et dans laquelle il est prévu des moyens ramasseurs (61) à proximité de l'extrémité inférieure du canal de chargement (62) pour ramasser des produits de récolte à partir du sol et les délivrer en direction des moyens chargeurs, et
caractérisée en ce que,
les moyens chargeurs comportent une structure de chargement rotative unique (76, 80, 37) comprenant des moyens (47) venant en contact avec la récolte qui, en fonctionnement, effectuent une rotation sur 360 degrés le long d'une trajectoire (69) qui:
- pénètre dans l'extrémité inférieure du canal de chargement,
- se dirige vers l'arrière à travers le canal de chargement (62),
- remonte dans la cage à balles (1) en vue de bourrer une botte de produits de récolte du canal de chargement (62) dans la cage à balles (1), et
- revient à l'extrémité inférieure du canal de chargement en vue d'attaquer une botte de produits de récolte suivante.

14. Ramasseuse-presse selon l'une quelconque des revendications 1 à 12, dans laquelle la cage à balles (1) possède une paroi inférieure dans laquelle l'orifice d'entrée (65) est formé; dans laquelle le canal de chargement (62) possède une extrémité supérieure tournée, d'une manière générale, vers le haut et communiquant avec l'orifice d'entrée (65) formé dans la cage à balles (1), et une extrémité inférieure tournée, d'une manière générale, dans une direction orientée vers l'avant; et dans laquelle il est prévu des moyens ramasseur (61) à proximité de l'extrémité inférieure du canal de chargement (62) pour ramasser des produits de récolte à partir du sol et les délivrer en direction des moyens chargeurs, et
caractérisée en ce que,
le canal de chargement (62) a une configuration courbée sensiblement d'une manière circulaire, le centre de courbure étant coïncident avec le premier axe ou proche de celui-ci, et en ce qu'en cours de fonctionnement, les séries de dents de tassement (46, 73) et la série de dents de bourrage (47) se déplacent alternativement à travers le canal de chargement (62) dans la direction allant de l'extrémité inférieure vers l'extrémité supérieure de celui-ci.
